# EUROPEAN PATENT APPLICATION

(11) **EP 4 723 759 A1**
(43) Date of publication of application: **08.04.2026**
(21) Application number: 24852338.3
(22) Date of filing: 07.08.2024
(51) Int. Cl.: H04W 56/00, H04W 74/04, H04W 74/00, H04W 72/231

(54) **METHOD AND DEVICE FOR CROSS-TRP RANDOM ACCESS**

(30) Priority: 10.08.2023 KR 20230105164
(71) Applicant: Hyundai Motor Company, Seoul 06797 (KR); Kia Corporation, Seoul 06797 (KR); Gachon University Industry-Academic Cooperation Foundation, Seongnam-si, Gyeonggi-do 13120 (KR)
(72) Inventor: HONG, Ui Hyun, Hwaseong-si, Gyeonggi-do 18280 (KR); LEE, Jeong Su, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR); SON, Hyuk Min, Seoul 05649 (KR)
(74) Representative: Isarpatent
(86) International application number: PCT/KR2024/011707
(87) International publication number: WO 2025/033985

(57) **Abstract**

Disclosed are a method and device for cross-TRP random access. The method performed by a UE comprises the steps of: receiving a cross-PDCCH order from a first TRP; identifying a second TRP on which to perform an RA procedure, the second TRP being identified on the basis of first indication information included in the cross-PDCCH order; and transmitting a message including an RA preamble to the second TRP, wherein the first TRP and the second TRP are different TRPs.

## Description

### [Technical Field]

The present disclosure relates to a random access technique, and more particularly, to a technique for cross-transmission and reception point (TRP) random access in a communication system including one or more TRPs.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, multiple transmission and reception points (mTRP) may be introduced into a communication network (e.g., 5G communication network and/or 6G communication network). The mTRP may be geographically separated. A base station may perform communication with a terminal using the mTRP. mTRP technology may be used to solve a quality of service (QoS) degradation problem of a cell-edge terminal and/or an inter-cell interference problem. In an environment where a non-line-of-sight (NLOS) path is limited, the mTRP technology may be used to provide an additional communication path.

mTRP-based communication may be performed based on a coherent joint transmission (CJT) scheme or a non-CJT (NCJT) scheme. In the CJT scheme, the mTRP may perform cooperative communication based on a stable backhaul link, and the mTRP may provide synchronized communication services to the terminal. In the NCJT scheme, the mTRP may provide communication services to the terminal without cooperation. For example, in the NCJT scheme, the mTRP may perform operations such as scheduling operations, precoding matrix selection operations, and modulation and coding scheme (MCS) determination operations without cooperation.

In mTRP-based communication, a terminal may apply a timing advance (TA) for each TRP for uplink transmission. The uplink transmission may refer to transmission of an UL channel and/or an UL signal. The terminal may acquire the TA by performing a random access (RA) procedure. A random access response (RAR) may include a timing advance command (TAC), and the terminal may acquire the TA based on the TAC included in the RAR. In another method, a base station may transmit a medium access control (MAC) control element (CA) including the TAC to the terminal. The terminal may acquire the TA based on the TAC included in the MAC CE received from the base station.

In mTRP-based communication, a first TRP may transmit a physical downlink control channel (PDCCH) order to the terminal. The terminal may receive the PDCCH order from the first TRP and may initiate an RA procedure based on the PDCCH order. In this case, an operation in which the terminal transmits an RA preamble to another TRP instead of the first TRP may be necessary. Specific methods for supporting the above operation are required.

### [Disclosure]

### [Technical Problem]

The present disclosure is directed to providing a method and apparatus for cross-TRP random access in a communication system including one or more TRPs.

### [Technical Solution]

A method of a user equipment (UE), according to exemplary embodiments of the present disclosure for achieving the above-described objective, may comprise: receiving, from a first transmission and reception point (TRP), a cross-physical downlink control channel (PDCCH) order; identifying a second TRP that is a target of a random access (RA) procedure based on first indication information included in the cross-PDCCH order; and transmitting, to the second TRP, a message including an RA preamble, wherein the first TRP and the second TRP are different TRPs.

The first indication information may indicate a timing advance group (TAG) identifier (ID), and the TAG ID may be configured to be associated with a transmission configuration indicator (TCI) state.

The first indication information may indicate a TCI state for the second TRP.

The first indication information may indicate a dedicated preamble for the RA procedure, a dedicated preamble group to which the dedicated preamble belongs may be configured to be associated with a control resource set (CORESET) pool, and the CORESET pool may be configured to be associated with a TCI state.

The first indication information may indicate a random access channel (RACH) occasion (RO) for transmission of the message, an RO group to which the RO belongs may be configured to be associated with a CORESET pool, and the CORESET pool may be configured to be associated with a TCI state.

The first indication information may indicate a cell identifier (ID), and the second TRP may belong to a cell indicated by the cell ID.

The message including the RA preamble may be Msg1 in a four-step RA procedure or MsgA in a two-step RA procedure.

The method may further comprise receiving, from the first TRP or the second TRP, a random access response (RAR) message that is a response to the message, wherein the RAR message may include timing advance (TA) information for the second TRP.

The UE may expect to receive the RAR message from one TRP among the first TRP or the second TRP, the one TRP being associated with a CORESET pool to which a CORESET in which a type 1 common search space (CSS) is configured belongs.

The RAR message may further include an uplink (UL) grant and second indication information indicating a transmission target of Msg3, and Msg3 may be transmitted to one TRP determined based on the second indication information among the first TRP or the second TRP.

A method of a base station, according to exemplary embodiments of the present disclosure for achieving the above-described objective, may comprise: generating a cross-physical downlink control channel (PDCCH) order indicating a second transmission and reception point (TRP) that is a target of a random access (RA) procedure; and transmitting the cross-PDCCH order to a user equipment (UE) via a first TRP, wherein in the RA procedure triggered by the cross-PDCCH order, a message including an RA preamble is transmitted from the UE to the second TRP, and the first TRP and the second TRP are different TRPs connected to the base station.

The first indication information may indicate a timing advance group (TAG) identifier (ID), and the TAG ID may be configured to be associated with a transmission configuration indicator (TCI) state.

The first indication information may indicate a TCI state for the second TRP.

The first indication information may indicate a dedicated preamble for the RA procedure, a dedicated preamble group to which the dedicated preamble belongs may be configured to be associated with a control resource set (CORESET) pool, and the CORESET pool may be configured to be associated with a TCI state.

The first indication information may indicate a random access channel (RACH) occasion (RO) for transmission of the message, an RO group to which the RO belongs may be configured to be associated with a CORESET pool, and the CORESET pool may be configured to be associated with a TCI state.

The first indication information may indicate a cell identifier (ID), and the second TRP may belong to a cell indicated by the cell ID.

The message including the RA preamble may be Msg1 in a four-step RA procedure or MsgA in a two-step RA procedure.

A user equipment (UE), according to exemplary embodiments of the present disclosure for achieving the above-described objective, may comprise at least one processor, wherein the at least one processor may cause the UE to perform: receiving, from a first transmission and reception point (TRP), a cross-physical downlink control channel (PDCCH) order; identifying a second TRP that is a target of a random access (RA) procedure based on first indication information included in the cross-PDCCH order; and transmitting, to the second TRP, a message including an RA preamble, wherein the first TRP and the second TRP are different TRPs.

The first indication information may indicate at least one of: a timing advance group (TAG) identifier (ID) for the second TRP, a transmission configuration indicator (TCI) state for the second TRP, a dedicated preamble for the RA procedure, a random access channel (RACH) occasion (RO) for transmission of the message, or a cell identifier (ID) indicating a cell to which the second TRP belongs.

The at least one processor may further cause the UE to perform: receiving, from the first TRP or the second TRP, a random access response (RAR) message that is a response to the message, wherein the RAR message may be received from one TRP among the first TRP or the second TRP, the one TRP being associated with a control resource set (CORESET) pool to which a CORESET in which a type 1 common search space (CSS) is configured belongs.

### [Advantageous Effects]

According to the present disclosure, a terminal can receive a cross-PDCCH order from a first TRP, identify a second TRP that is a target of an RA procedure based on information included in the cross-PDCCH order, and transmit a message including an RA preamble to the second TRP. Since the second TRP that is the target of the RA procedure can be identified based on the information included in the cross-PDCCH order, the RA procedure based on the cross-PDCCH order can be performed efficiently.

### [Description of Drawings]

FIG. 1 is a conceptual diagram illustrating exemplary embodiments of a communication system.
FIG. 2 is a block diagram illustrating exemplary embodiments of a communication node constituting a communication system.
FIG. 3 is a block diagram illustrating exemplary embodiments of communication nodes performing communication.
FIG. 4A is a block diagram illustrating exemplary embodiments of a transmission path.
FIG. 4B is a block diagram illustrating exemplary embodiments of a reception path.
FIG. 5 is a conceptual diagram illustrating exemplary embodiments of a system frame in a communication system.
FIG. 6 is a conceptual diagram illustrating exemplary embodiments of a subframe in a communication system.
FIG. 7 is a conceptual diagram illustrating exemplary embodiments of a slot in a communication system.
FIG. 8 is a conceptual diagram illustrating exemplary embodiments of a time-frequency resource in a communication system.
FIG. 9 is a sequence chart illustrating a cross-PDCCH order-based CFRA procedure.
FIG. 10 is a sequence chart illustrating a cross-PDCCH order-based CFRA procedure.
FIGS. 11 to 15 are sequence charts illustrating a cross-PDCCH order-based four-step CBRA procedure.
FIG. 16 is a sequence chart illustrating a four-step CBRA procedure based on a PDCCH order.
FIG. 17 and FIG. 18 are sequence charts illustrating a two-step CBRA procedure based on a cross-PDCCH order.
FIG. 19 is a sequence chart illustrating a two-step CBRA procedure based on a PDCCH order.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

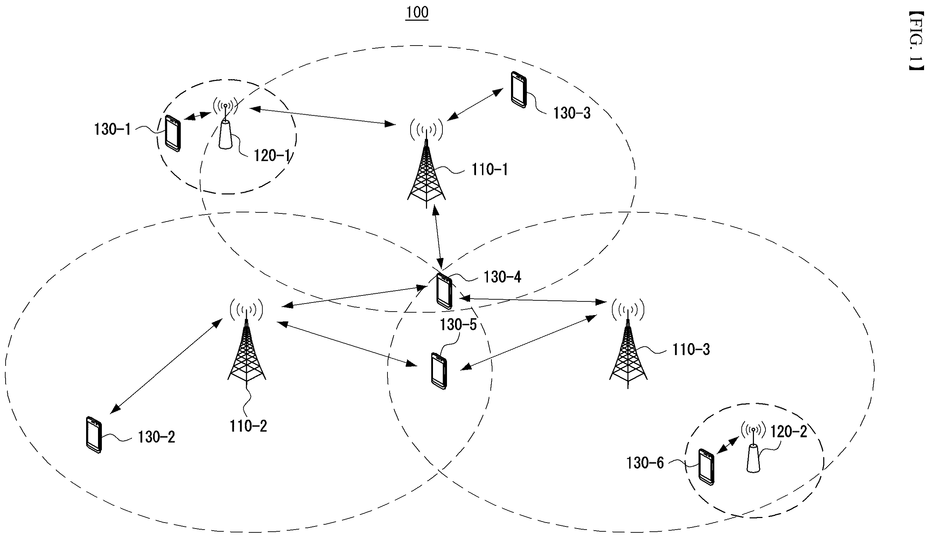

FIG. 1 is a conceptual diagram illustrating exemplary embodiments of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

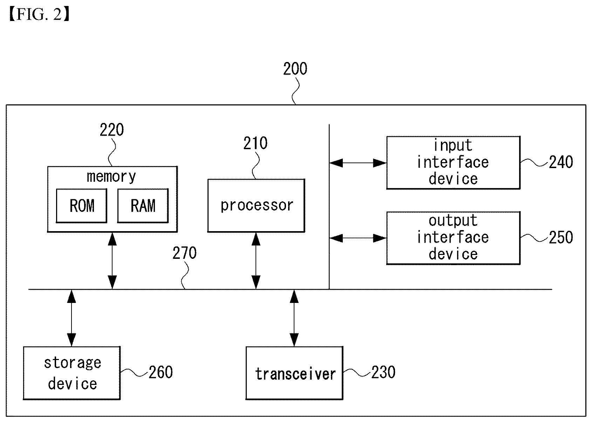

FIG. 2 is a block diagram illustrating exemplary embodiments of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

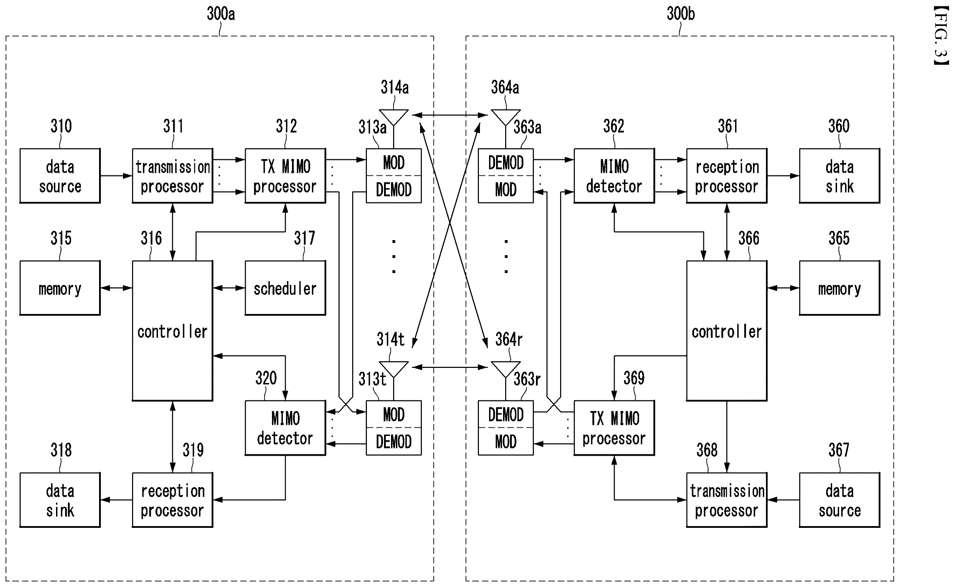

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating exemplary embodiments of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

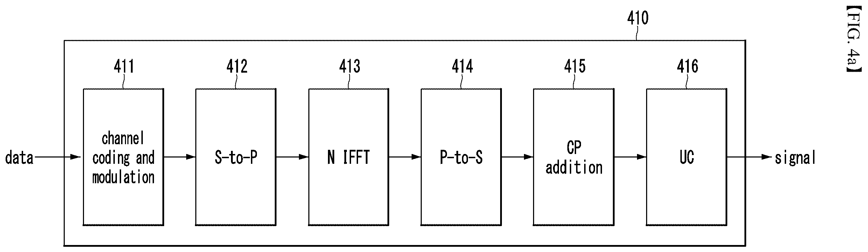

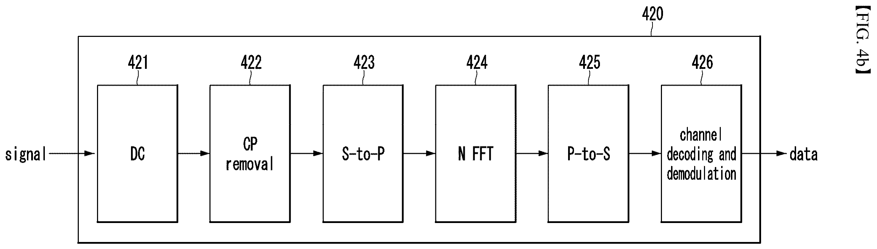

FIG. 4A is a block diagram illustrating exemplary embodiments of a transmission path, and FIG. 4B is a block diagram illustrating exemplary embodiments of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

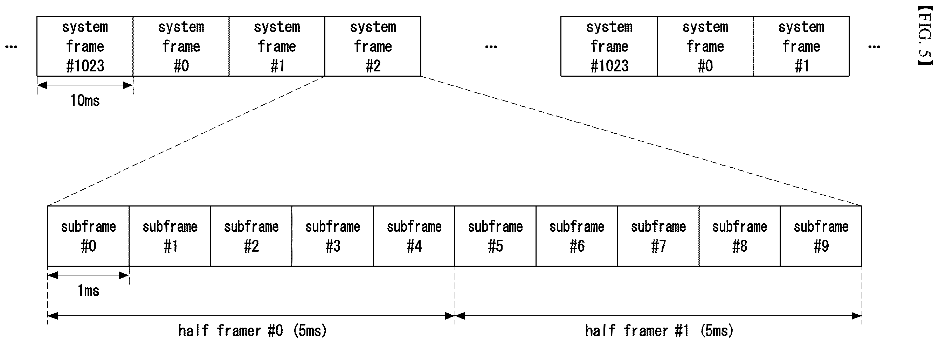

FIG. 5 is a conceptual diagram illustrating exemplary embodiments of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

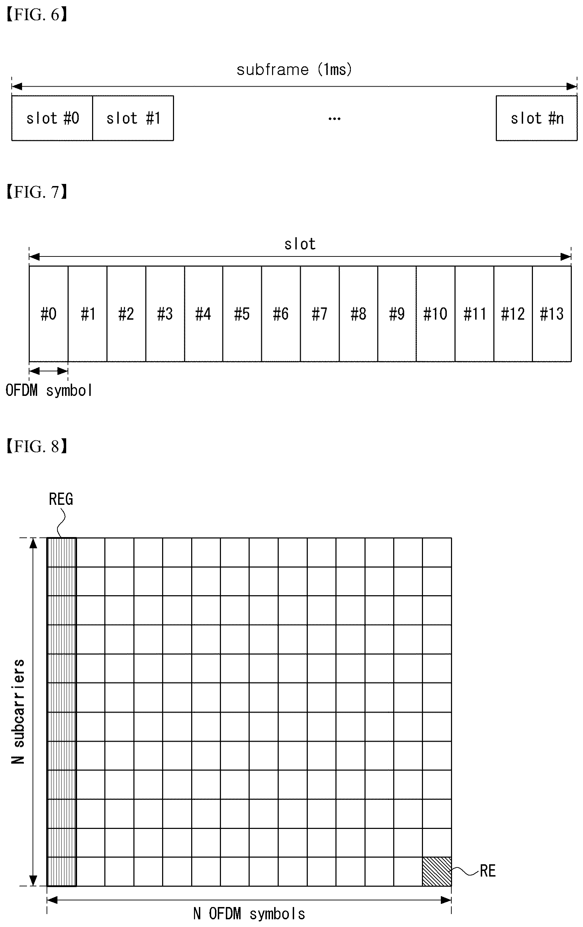

FIG. 6 is a conceptual diagram illustrating exemplary embodiments of a subframe in a communication system.

As shown in FIG. 6, one subframe may include n slots, and n may be a natural number. Accordingly, one subframe may consist of one or more slots.

FIG. 7 is a conceptual diagram illustrating exemplary embodiments of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., µ = 0), the length of slot may be 1 ms. In this case, one system frame may include 10 slots. When a subcarrier spacing is 30 kHz (e.g., µ = 1), the length of slot may be 0.5 ms. In this case, one system frame may include 20 slots.

When a subcarrier spacing is 60 kHz (e.g., µ = 2), the length of slot may be 0.25 ms. In this case, one system frame may include 40 slots. When a subcarrier spacing is 120 kHz (e.g., µ = 3), the length of slot may be 0.125 ms. In this case, one system frame may include 80 slots. When a subcarrier spacing is 240 kHz (e.g., µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating exemplary embodiments of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) of the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g., NR communication system, 5G communication system, or 6G communication system) may support use scenarios such as enhanced Mobile BroadBand (eMBB), Ultra Reliable Low Latency Communication (URLLC), and massive Machine Type Communication (mMTC). The communication system (e.g., communication network) may support a transmission and reception point (TRP) technology (e.g., multi-TRP (mTRP) technology and/or single TRP (sTRP) technology). The communication system supporting the TRP technology may be referred to as a TRP system (e.g., mTRP system and/or sTRP system). In the present disclosure, 'TRP' may have a meaning including 'sTRP' and/or 'mTRP', and 'TRP' may refer to 'sTRP' or 'mTRP' depending on a context. A TRP may refer to an antenna set, antenna group, and/or antenna array. A TRP may be associated with a CORESET and/or a beam (e.g., beam group).

The mTRP technology may fall under a category of MIMO technology. The mTRP may have characteristics (e.g., cell-level characteristics) of macro cells, small cells, pico cells, and/or femto cells. The mTRP may perform data transmission for a terminal. In a case where a channel (e.g., link) with a non-uniform channel condition exists due to an obstacle and/or interference, the mTRP may mitigate the effect caused by the obstacle and/or interference. The mTRP may improve a data transmission rate for a terminal located in a cell edge.

mTRP-based communication may be performed based on a coherent joint transmission (CJT) scheme or a non-coherent joint transmission (NCJT) scheme. In the CJT scheme, a base station may be aware of channel information between each TRP and a terminal and may perform a preprocessing operation for data based on the channel information. In this case, an overhead caused by a transmission procedure of the channel information may increase, and synchronization constraints among the TRPs may occur. In the NCJT scheme, a base station may not need to be aware of channel information between each TRP and a terminal. The mTRP may transmit data to the terminal without performing a preprocessing operation such as phase compensation. The complexity of the NCJT scheme may be lower than the complexity of the CJT scheme.

NCJT-based mTRP communication may be performed based on a single-DCI scheme or a multi-DCI scheme. In the single-DCI scheme, PDSCHs transmitted by mTRP may be scheduled by a single DCI. The single DCI may be transmitted by one TRP of the mTRP. In the multi-DCI scheme, a PDSCH transmitted by each TRP may be scheduled by a DCI transmitted by the corresponding TRP. For example, a first PDSCH transmitted by a first TRP may be scheduled by a first DCI transmitted by the first TRP, and a second PDSCH transmitted by a second TRP may be scheduled by a second DCI transmitted by the second TRP. In other words, a plurality of PDSCHs may be scheduled using a plurality of DCIs.

In the single-DCI scheme, a terminal may expect to receive PDSCHs transmitted by different TRPs through different layers while using the same time and frequency resource. Alternatively, the terminal may expect to receive PDSCHs transmitted by different TRPs through different time resources (e.g., different time regions) while using the same frequency resource and the same layer. Alternatively, the terminal may expect to receive PDSCHs transmitted by different TRPs through different frequency resources (e.g., different frequency regions) while using the same time resource and the same layer.

In the multi-DCI scheme, PDSCH scheduling for each TRP may be performed by an individual DCI. PDSCHs scheduled by a plurality of DCIs may be fully overlapped or partially overlapped. Alternatively, PDSCHs scheduled by a plurality of DCIs may not be overlapped. In both the single-DCI scheme and the multi-DCI scheme, the DCI may include transmission configuration indicator (TCI) state information for PDSCH(s).

An indication/configuration of a TCI state for a terminal may be interpreted as an indication/configuration of a beam (e.g., a transmission beam and/or a reception beam). In other words, the TCI state may have a meaning corresponding to the beam. From the perspective of downlink (DL) communication, configuration of a TCI state may refer to configuration of a quasi-co-location (QCL). From the perspective of uplink (UL) communication, configuration of a TCI state may refer to configuration of a spatial filter. A unified TCI state may indicate (e.g., configure) a common beam regardless of DL communication and UL communication. Alternatively, a unified TCI state may indicate (e.g., configure) a common beam for each of DL communication and UL communication. The unified TCI may be referred to as 'UTCI'.

To enhance the reliability and/or robustness of mTRP communication, improvements such as PDCCH enhancements may be applied. Deployment scenarios for PDCCH enhancement may be classified into a single frequency network (SFN) and a non-SFN.

In the SFN scheme, different TRPs or different panels may transmit the same PDCCH using the same resource (e.g., the same time resource, the same frequency resource, and/or the same spatial resource). In other words, all TRPs or all panels may transmit the PDCCH using the same DMRS configuration, the same DMRS position, and/or the same DMRS sequence. In this case, from the reception perspective for the TRPs or panels, TCI states may be implicitly configured differently. The above-described exemplary embodiment may be performed based on a plurality of TCI states of a CORESET. Synchronization constraints for an ideal backhaul or a near-ideal backhaul among the TRPs may exist.

In the NSFN scheme, PDCCHs generated by the respective TRPs may be multiplexed in the time domain and/or the frequency domain, and the multiplexed PDCCHs may be transmitted to the terminal. This scheme may be an mTRP-based PDCCH repetition scheme. In the NSFN scheme, the number of encoded bits equal to the number of bits delivered through one PDCCH generated in each TRP may be divided among the TRPs, and the TRP-specific bits (e.g., encoded bits) may be transmitted through a different PDCCH candidate for each TRP. This scheme may correspond to an sTRP-based PDCCH transmission scheme.

In the mTRP-based PDCCH repetition scheme, a PDCCH may be duplicated according to the number of TRPs, and the PDCCHs may be transmitted in the same search spaces (e.g., search spaces having the same index) within different search space sets, each having the same number of PDCCH candidates. In this case, the search space sets may exist within the same CORESET or within different CORESETs. Since one TCI state may be associated with each CORESET, when PDCCHs are transmitted from different search spaces within the same CORESET, only one TCI state for the PDCCHs transmitted from the different search spaces may be indicated (e.g., configured). In this case, the terminal may receive one PDCCH from one TRP at a specific time.

When the PDCCHs are transmitted from the same search spaces within different CORESETs, the terminal may implicitly expect to receive the PDCCH from sTRP or mTRP depending on the number of TCI states (e.g., TCI states indicated or configured by the base station). In this case, a single PDCCH may be divided into as many PDCCHs as the number of TRPs, and the divided PDCCHs may be transmitted in different PDCCH candidates. In this case, an aggregation level and a combined aggregation level may be the same. In the above exemplary embodiment, the PDCCH candidates may be allocated to different CORESETs. A payload size for a combination of finally distributed PDCCHs may be the same as a payload size of a PDCCH transmitted from sTRP. Accordingly, in terms of decoding complexity, the sTRP-based PDCCH transmission scheme may be more advantageous than the mTRP-based PDCCH repetition scheme.

A terminal may perform mTRP communication or sTRP communication with a base station. The mTRP communication between the terminal and the base station may be performed via mTRP associated with the base station. The sTRP communication between the terminal and the base station may be performed via sTRP associated with the base station. The mTRP communication may be referred to as first TRP communication, and the sTRP communication may be referred to as second TRP communication. Alternatively, the mTRP communication may be referred to as second TRP communication, and the sTRP communication may be referred to as first TRP communication. The expression 'A terminal performs first TRP communication with a base station' may mean that the terminal performs mTRP communication or sTRP communication with the base station via one or more TRPs associated with the base station. The expression "A terminal performs second TRP communication with a base station" may mean that "the terminal performs sTRP communication or mTRP communication with the base station via one or more TRPs associated with the base station".

In a communication system, a united TCI framework may be supported. A base station may transmit information of a pool (e.g., pool list) of TCI states to a terminal using RRC signaling. The terminal may receive the information of the pool (e.g., pool list) of TCI states through the RRC signaling of the base station. The base station may configure type information of TCI states for the terminal. The type information may indicate a joint DL/UL beam indication or a separate DL/UL beam indication. The joint DL/UL beam indication may be referred to as 'joint indication' or 'joint type'. The separate DL/UL beam indication may be referred to as 'separate indication' or 'separate type'.

When the joint type (e.g., joint indication) is configured, a TCI state (e.g., one TCI state) for DL and UL may be configured. In other words, a DL TCI state configuration and a UL TCI state configuration may be the same. The terminal may expect that a TCI state indicated by an information element included in PDSCH configuration information is applied to both DL (e.g., DL signal/channel) and UL (e.g., UL signal/channel). The term 'signal/channel' may refer to a signal and/or a channel. When the separate type (e.g., separate indication) is configured, TCI states for DL and UL, respectively, may be configured. In other words, a DL TCI state configuration may be distinguished from a UL TCI state configuration. The terminal may expect that a UL TCI state indicated by an information element included in UL BWP configuration information is applied to UL (e.g., UL signal/channel). A UL signal/channel may include PUSCH, PUCCH, and/or SRS.

After the pool (e.g., pool list) of TCI states is configured (e.g., indicated) by RRC signaling, the base station may indicate TCI state(s) (e.g., application of the TCI state(s)) using DCI (e.g., DCI signaling). Due to the constraint of the DCI size (e.g., bits of DCI fields), the base station may preferentially activate candidate TCI state(s) using MAC signaling (e.g., MAC CE signaling). In other words, candidate TCI states, up to a certain number (e.g., a maximum number) that can be indicated or configured through DCI, may be preferentially activated by a MAC CE.

For the activated candidate TCI state(s), DCI may include a codepoint corresponding to a single TCI state or two TCI states according to a TCI state type (e.g., joint type or separate type). When the joint type is configured, a codepoint corresponding to a single TCI state may be delivered by the DCI. When the separate type is configured, a codepoint corresponding to two TCI states may be delivered by the DCI.

Meanwhile, intra-cell mTRP or inter-cell mTRP may support a cross-PDCCH order-based RA procedure. An RA procedure may be classified into a contention-free random access (CFRA) procedure and/or a contention-based random access (CBRA) procedure. In a signaling procedure for cross-TRP RA, an indication of a TCI state may be necessary for transmission and reception of a signal between a terminal and a TRP. In the present disclosure, a term 'signal' may refer to a signal or a channel. In addition, a term 'signal' may be used as a term encompassing 'signal + channel'. In a cross-PDCCH order-based RA procedure, a terminal may receive a PDCCH order from a first TRP, and based on the PDCCH order, the terminal may transmit an RA preamble to a second TRP. In other words, the terminal may perform an RA procedure initiated by the PDCCH order of the first TRP with the second TRP. The PDCCH order for the cross-PDCCH order-based RA procedure may be referred to as a cross-PDCCH order. In the present disclosure, a PDCCH order may be interpreted as a cross-PDCCH order depending on a context. The RA procedure may be a four-step RA procedure or a two-step RA procedure.

For the RA procedure between the terminal and the TRP, information (e.g., TCI state indication) on a beam used for communication between the terminal and the TRP may be indicated (e.g., configured) to the terminal before performance of the RA procedure. In the RA procedure, signals (e.g., messages) may be transmitted and received via different TRPs. In this case, additional TCI state indication(s) may be necessary for transmission and reception of the signals. In other words, signaling methods of the TCI state indication may be necessary for cross-TRP RA operation. In addition to the signaling methods of the TCI state indication, signaling methods of other information may be necessary for cross-TRP operation.

A synchronization signal block (SSB) transmission configuration, a random access occasion (RO) configuration, and/or an association configuration between SSB and RO (e.g., an association configuration for beam information) may be configured (e.g., indicated, operated) in a cell-specific manner. Since the configurations are operated in a cell-specific manner, in an mTRP system (e.g., mTRP communication system), a terminal may not be able to recognize a TRP that transmitted SSBs. A previous SSB may be transmitted via a specific TRP, and the terminal may acquire beam configuration information for ROs based on the SSB received via the specific TRP. In the above situation, the terminal may perform an RA procedure with the second TRP based on a cross-PDCCH order received from the first TRP. The cross-PDCCH order may indicate RO information. The cross-PDCCH order may include beam configuration information, and the beam configuration information may be information for the specific TRP (e.g., the first TRP) that transmitted the previous SSB rather than the second TRP which is a target of the RA procedure. In this case, an ambiguity regarding beam configuration may occur in the RA procedure. A term 'RO' may refer to a physical random access channel (PRACH) occasion or a random access channel (RACH) occasion.

In a signaling procedure for cross-TRP RA, signaling methods of a TCI state indication may be necessary for the RA procedure between the terminal and the TRP. The TCI state indication may be used to indicate a TRP that transmits and receives a signal (e.g., message) with the terminal. The TCI state indication may be used to indicate a TRP performing the RA procedure with the terminal. In the present disclosure, signaling methods for cross-TRP RA will be described. The signaling methods may include a signaling method of a TCI state indication for cross-TRP RA.

Exemplary embodiments of the present disclosure may be applied to single-DCI-based mTRP communication and/or multi-DCI-based mTRP communication. Although exemplary embodiments of the present disclosure are described based on a communication system including two TRPs, the exemplary embodiments of the present disclosure may also be applied to a communication system including three or more TRPs. In the present disclosure, a TRP that transmits a PDCCH order indicating initiation (e.g., performance) of an RA procedure may be referred to as TRPx (or the first TRP), and a TRP that is a target of the RA procedure initiated by the PDCCH order may be referred to as TRPy (or the second TRP). TRPy may receive an RA preamble from the terminal and may determine (e.g., measure) a timing advance (TA) based on the RA preamble. The TA may be determined by a base station connected to TRPy. TRPx (or the first TRP) and TRPy (or the second TRP) may refer to different TRPs. TRPx and TRPy may be connected to different base stations. Alternatively, TRPx and TRPy may be connected to the same base station. TRPx and TRPy may also refer to the same TRP.

### 1. Cross-PDCCH order-based CFRA procedure

### 1.1 Method #1

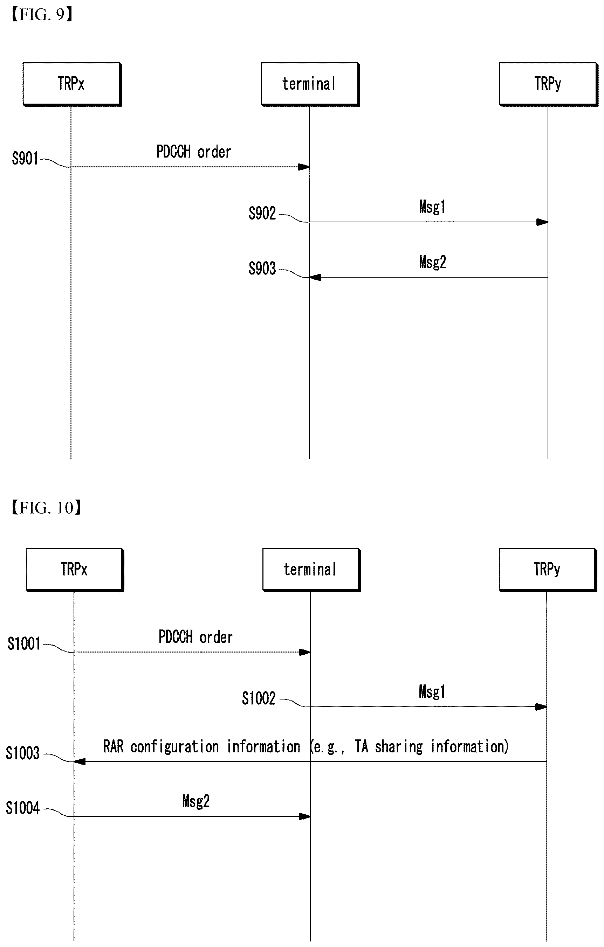

FIG. 9 is a sequence chart illustrating a cross-PDCCH order-based CFRA procedure.

As shown in FIG. 9, TRPx may transmit a PDCCH order to the terminal (S901). The PDCCH order may be generated in a base station connected to TRPx. The base station may transmit the PDCCH order to the terminal via TRPx. The PDCCH order may include at least one among dedicated preamble information or RO information. The PDCCH order may include information indicating a target of the RA procedure (e.g., information indicating TRPy, a TCI state indication for TRPy, and/or the like). The PDCCH order may include information indicating that the PDCCH order is a cross-PDCCH order. The PDCCH order may include information indicating that a cross-TRP RA procedure is initiated.

The terminal may receive the PDCCH order from TRPx (S901). The terminal may identify the information (e.g., indication information) included in the PDCCH order, and based on the identified information, the terminal may transmit, to TRPy, a message (e.g., Msg1 or MsgA) including an RA preamble (S902). For example, the terminal may generate the RA preamble based on the dedicated preamble information included in the PDCCH order, and may transmit the RA preamble to TRPy in an RO indicated by the RO information included in the PDCCH order. The RA preamble may be an RA preamble for Msg1 or MsgA. In other words, the terminal may perform a four-step RA procedure or a two-step RA procedure based on the PDCCH order.

Msg1 (or MsgA) may be an RA request message. The transmission of Msg1 (or MsgA) may refer to transmission of a dedicated RA preamble in a specific time/frequency resource (e.g., RO). TRPy may receive Msg1 (or MsgA) from the terminal (S902). TRPy may generate Msg2 (or MsgB). Msg2 (or MsgB) may be a random access response (RAR) message. TRPy may determine a TA based on Msg1 (or MsgA), and the TA may be included in Msg2 (or MsgB). The TA may be determined in a base station connected to TRPy instead of TRPy. TRPy may transmit Msg2 (or MsgB) to the terminal (S903). In other words, the base station may transmit Msg2 (or MsgB) to the terminal via TRPy.

The terminal may receive Msg2 (or MsgB) from TRPy (S903). The terminal may identify information (e.g., TA) included in Msg2 (or MsgB). The terminal may perform uplink transmission using the TA. The uplink transmission may be performed for at least one of TRPx or TRPy. In the present disclosure, Msg1 may be interpreted as MsgA, and MsgA may be interpreted as Msg1 depending on a context. Msg2 may be interpreted as MsgB, and MsgB may be interpreted as Msg2 depending on a context. In other words, a method proposed for the four-step RA procedure in the present disclosure may be identically or similarly applied to the two-step RA procedure, and a method proposed for the two-step RA procedure in the present disclosure may be identically or similarly applied to the four-step RA procedure.

In FIG. 9, the PDCCH order may be transmitted for the purpose of cross-TRP RA. In other words, the PDCCH order from TRPx may be transmitted for the purpose of performing an RA procedure for TRPy. Alternatively, the PDCCH order from TRPx may be transmitted for the purpose of performing an RA procedure for TRPx. The PDCCH order may explicitly or implicitly include information (e.g., indication information) indicating a TRP that is a target of the RA procedure initiated by the PDCCH order. The PDCCH order may include TCI state information for communication with the TRP. When the PDCCH order of TRPx indicates initiation of an RA procedure for TRPy, the PDCCH order may include indication information (e.g., TCI state information) for a beam used for the RA procedure (e.g., RA preamble transmission) for TRPy.

### 1.1.1 Indication Method #1

The PDCCH order may include a timing advance group (TAG) identifier (ID) (e.g., TAG ID field) indicating the TRP that is the target of the RA procedure initiated by the PDCCH order. The TAG ID may be configured to be associated with a TCI state (e.g., a UL/joint TCI state or a DL/joint TCI state). The UL/joint TCI state may be associated with a CORESET pool index (e.g., *CORESETpoolindex*). In other words, the TCI state may be associated with a CORESET pool. The TAG ID may be configured to be associated with a CORESET (or a CORESET pool to which the CORESET belongs). Since a CORESET pool may be configured per TRP (e.g., per TCI state), the TRP that is the target of the RA procedure initiated by the PDCCH order may be identified based on an association relationship between the TAG ID and the UL/joint TCI state or an association relationship between the TAG ID, the UL/joint TCI state, and the CORESET.

In other words, the TAG ID included in the PDCCH order may indicate the TRP that is the target of the RA procedure and/or the TCI state used for the RA procedure. The UL/joint TCI state may be configured to the terminal by signaling (e.g., RRC signaling) of a base station. When the UL/joint TCI state is not configured, the terminal may assume that the TAG ID is associated with a DL/joint TCI state. Reserved bit(s) included in the PDCCH order may be used to indicate the TAG ID. Alternatively, one field (e.g., frequency domain resource allocation (FDRA) field) or a combination of two or more fields included in the PDCCH order may be used to indicate the TAG ID.

### 1.1.2 Indication Method #2

The PDCCH order may include TCI state information (e.g., TCI field) indicating the TRP that is the target of the RA procedure initiated by the PDCCH order. A TCI state (e.g., UL/joint TCI state) indicated by the TCI state information may be associated with a TAG ID and/or a CORESET pool index. The TCI state information included in the PDCCH order may indicate the TRP that is the target of the RA procedure. The TCI state information included in the PDCCH order may indicate the TCI state used for the RA procedure (e.g., signaling for the RA procedure). Reserved bit(s) included in the PDCCH order may be used to indicate the TCI state. TCI states may be configured to the terminal by RRC signaling of the base station, and among the TCI states configured by the RRC signaling, one or more TCI states may be activated by a MAC CE. The TCI state information included in the PDCCH order may indicate at least one TCI state among the one or more TCI states activated by the MAC CE.

In the RA procedure illustrated in FIG. 9, the terminal may perform uplink communication and/or downlink communication with TRPy. The uplink communication may refer to transmission of Msg1, and the downlink communication may refer to reception of Msg2. The terminal may perform the RA procedure with TRPy based on the TCI state indicated by the indication method #1 or the indication method #2. The TCI state indicated by the indication method #1 or the indication method #2 may be a joint TCI state or a UL TCI state. The UL TCI state may form a pair with a DL TCI state.

### 1.1.3 Indication Method #3

The PDCCH order may include a TAG ID and TCI state information to indicate the TRP that is the target of the RA procedure initiated by the PDCCH order. In other words, the TAG ID and the TCI state information may be used to indicate the TRP that is the target of the RA procedure. When one TCI state is associated with two or more TAG IDs, the terminal may not be able to know which TAG is indicated for TA update based only on the TCI state information. In this case, the TAG ID and the TCI state information may both be necessary to indicate the TRP that is the target of the RA procedure. Identically or similarly to the indication method #1 and/or the indication method #2, reserved bit(s) included in the PDCCH order may be used to indicate the TAG ID and the TCI state information.

### 1.1.4 Indication Method #4

Dedicated preamble(s) for CFRA procedure may be configured per TRP (e.g., per TCI state). For example, a dedicated preamble group #0 associated with CORESET pool #0 may be configured, and a dedicated preamble group #1 associated with CORESET pool #1 may be configured. Each dedicated preamble group may include one or more dedicated preambles (e.g., one or more RA preambles). A base station may configure (e.g., indicate) the dedicated preamble group #0 associated with CORESET pool #0 and/or the dedicated preamble group #1 associated with CORESET pool #1 to the terminal through signaling. The terminal may identify the dedicated preamble group #0 associated with CORESET pool #0 and/or the dedicated preamble group #1 associated with CORESET pool #1 configured by the base station. In the present disclosure, signaling may be at least one among system information (SI) signaling, RRC signaling, MAC CE signaling, or PHY signaling (e.g., DCI).

The PDCCH order may include information indicating an RA preamble (e.g., dedicated preamble). The terminal may identify a dedicated preamble group to which the RA preamble indicated by the PDCCH order belongs. When the dedicated preamble group to which the RA preamble belongs is the dedicated preamble group #0, the terminal may perform the CFRA procedure based on a TCI state associated with CORESET pool #0 associated with the dedicated preamble group #0. In other words, the terminal may perform the CFRA procedure with a TRP associated with CORESET pool #0 associated with the dedicated preamble group #0.

### 1.1.5 Indication Method #5

RO(s) (e.g., dedicated RO(s)) for CFRA procedure may be configured per TRP (e.g., per TCI state). For example, a dedicated RO group #0 associated with CORESET pool #0 may be configured, and a dedicated RO group #1 associated with CORESET pool #1 may be configured. Each dedicated RO group may include one or more dedicated ROs. A base station may configure (e.g., indicate) the dedicated RO group #0 associated with CORESET pool #0 and/or the dedicated RO group #1 associated with CORESET pool #1 to the terminal through signaling (e.g., SI signaling, RRC signaling, MAC CE signaling, and/or PHY signaling). The terminal may identify the dedicated RO group #0 associated with CORESET pool #0 and/or the dedicated RO group #1 associated with CORESET pool #1 configured by the base station.

The PDCCH order may include information indicating an RO (e.g., dedicated RO). The terminal may identify a dedicated RO group to which the dedicated RO indicated by the PDCCH order belongs. When the dedicated RO group to which the dedicated RO belongs is the dedicated RO group #0, the terminal may perform the CFRA procedure based on a TCI state associated with CORESET pool #0 associated with the dedicated RO group #0. In other words, the terminal may perform the CFRA procedure with a TRP associated with CORESET pool #0 associated with the dedicated RO group #0.

### 1.1.6 Indication Method #6

The TRPs may belong to different cells. In this case, an inter-cell cross-TRP RA procedure may be performed. The TRPs belonging to different cells may have different physical cell identifiers (PCIs). To indicate the TRP that is the target of the RA procedure in the above situation, the PDCCH order may include a PCI and/or an ID (e.g., cell ID) associated with a cell. The PCI and/or the ID associated with the cell may indicate the TRP that is the target of the RA procedure. The terminal may perform the RA procedure (e.g., transmission operation of an RA preamble) with the TRP belonging to the cell having the ID included in the PDCCH order.

The ID (e.g., PCI and/or ID associated with the cell) may be associated with a PRACH configuration (e.g., RACH configuration). For example, PRACH configuration information (e.g., RACH configuration information) may include the PCI and/or the ID associated with the cell, and an RA procedure for TRP(s) indicated by the PCI and/or the ID associated with the cell may be performed based on the PRACH configuration information. A base station may transmit the PRACH configuration information to the terminal. The terminal may receive the PRACH configuration information from the base station, and may perform the RA procedure with TRP(s) based on the PRACH configuration information. For example, the terminal may perform the RA procedure with the TRP(s) indicated by the ID included in the PRACH configuration information.

The PRACH configuration information may be associated with one TCI state or two or more TCI states. The base station may indicate (e.g., configure) association information (e.g., mapping information) between the PRACH configuration information and the TCI state(s) to the terminal through signaling (e.g., SI signaling, RRC signaling, MAC CE signaling, and/or PHY signaling). The terminal may receive the association information between the PRACH configuration information and the TCI state(s) from the base station, identify the TCI state(s) associated with the PRACH configuration information, and may perform the RA procedure with the TRP(s) based on the identified TCI state(s).

The base station may configure a mapping relationship between the PRACH configuration information and the TCI state(s), a mapping relationship between the PRACH configuration information and the TAG ID, and/or a mapping relationship between the PRACH configuration information, the TCI state, and the TAG ID, and may indicate (e.g., configure) information on the mapping relationships to the terminal through signaling (e.g., SI signaling, RRC signaling, MAC CE signaling, and/or PHY signaling). The terminal may receive the information on the mapping relationships from the base station. The base station (e.g., TRP connected to the base station) may transmit, to the terminal, the PDCCH order including TCI state information (e.g., TCI state indication) and/or a TAG ID (e.g., TAG ID indication). The TCI state information and/or the TAG ID may indicate the TRP that is the target of the RA procedure. The terminal may receive the PDCCH order from the base station, and may identify the information included in the PDCCH order. The terminal may identify the TRP that is the target of the RA procedure based on the TCI state information and/or the TAG ID included in the PDCCH order, and may perform the RA procedure with the identified TRP.

Each of the indication methods #1 to #6 may be applied to a cross-PDCCH order-based CFRA procedure. A combination of two or more among the indication methods #1 to #6 may be applied to a cross-PDCCH order-based CFRA procedure. A modified method and/or an extended method of the indication methods #1 to #6 may be applied to a cross-PDCCH order-based CFRA procedure.

FIG. 10 is a sequence chart illustrating a cross-PDCCH order-based CFRA procedure.

As shown in FIG. 10, TRPx may transmit a PDCCH order to the terminal (S1001). The PDCCH order may be generated in a base station connected to TRPx. The base station may transmit the PDCCH order to the terminal via TRPx. The PDCCH order may include at least one among dedicated preamble information or RO information. The PDCCH order may include information indicating a target of the RA procedure (e.g., information indicating TRPy, a TCI state indication for TRPy, and/or the like). The PDCCH order may include information indicating that the PDCCH order is a cross-PDCCH order. The PDCCH order may include information indicating that a cross-TRP RA procedure is initiated.

The terminal may receive the PDCCH order from TRPx (S1001). The terminal may identify the information (e.g., indication information) included in the PDCCH order, and based on the identified information, the terminal may transmit, to TRPy, a message (e.g., Msg1 or MsgA) including an RA preamble (S1002). For example, the terminal may generate the RA preamble based on the dedicated preamble information included in the PDCCH order, and may transmit the RA preamble to TRPy in an RO indicated by the RO information included in the PDCCH order. The RA preamble may be an RA preamble for Msg1 or MsgA. In other words, the terminal may perform a four-step RA procedure or a two-step RA procedure based on the PDCCH order.

Msg1 (or MsgA) may be an RA request message. The transmission of Msg1 (or MsgA) may refer to transmission of a dedicated RA preamble in a specific time/frequency resource (e.g., RO). TRPy may receive Msg1 (or MsgA) from the terminal (S1002). TRPy that receives Msg1 may generate information required for generation of Msg2 (or MsgB). Msg2 (or MsgB) may be an RAR message. The information required for generation of the RAR message may include information on a TA measured by TRPy. TRPy may determine the TA based on Msg1 received from the terminal, and may generate TA information including the determined TA. The TA may be determined by a base station connected to TRPy. The information required for generation of the RAR message may include a radio network temporary identifier (RNTI) determined by TRPy. The RNTI may be used for transmission of Msg2.

The information required for generation of the RAR message may be defined as RAR configuration information. TRPy may transmit the RAR configuration information to TRPx (S1003). TRPx may receive the RAR configuration information from TRPy (S1003). Step S1003 may be a sharing step of the RAR configuration information (e.g., TA information). The RAR configuration information may include at least one among the TA information, information required for determination of the TA, the RNTI for transmission of Msg2, or information required for determination of the RNTI for transmission of Msg2. TRPy may determine the TA based on Msg1 received from the terminal, and may transmit information on the determined TA to TRPx in step S1003. Alternatively, the TA for the terminal may be determined in TRPx instead of TRPy, and to support the above operation, TRPy may transmit, to TRPx in step S1003, information required for determination of the TA. TRPy may determine the RNTI based on resource information of an RO in which Msg1 of the terminal is received, and may transmit the determined RNTI to TRPx in step S1003. Alternatively, the RNTI for transmission of Msg2 may be determined in TRPx instead of TRPy, and to support the above operation, TRPy may transmit, to TRPx in step S1003, information required for determination of the RNTI.

TRPx may generate Msg2 (or MsgB) based on the RAR configuration information received from TRPy, and may transmit Msg2 to the terminal (S1004). In other words, the base station may transmit Msg2 to the terminal via TRPx. Msg2 may include the TA information for the terminal. For example, TRPx may determine the TA based on the information required for determination of the TA included in the RAR configuration information, and may determine the RNTI based on the information required for determination of the RNTI for transmission of Msg2 included in the RAR configuration information. Msg2 may include the TA information for TRPx and/or the TA information for TRPy. The terminal may receive Msg2 from TRPx, and may identify the information (e.g., TA information) included in Msg2. The terminal may perform uplink communication based on the TA indicated by Msg2.

In intra-cell mTRP communication, step S1003 (e.g., TA sharing operation) may be performed by the base station to which the TRPs are connected. In inter-cell mTRP communication, step S1003 (e.g., TA sharing operation) may be performed through an interface between base stations to which the TRPs are connected. The TA sharing operation described above may be identically or similarly applied to exemplary embodiments of the present disclosure.

In FIG. 10, the PDCCH order may be transmitted for initiation of the cross-TRP RA procedure (e.g., RA procedure for TRPy). Alternatively, the PDCCH order may be transmitted for initiation of an RA procedure for TRPx. The PDCCH order may include information (e.g., indication information) indicating the TRP (e.g., TRPx or TRPy) that is the target of initiation (e.g., performance) of the RA procedure. The TRP that is the target of initiation of the RA procedure may be explicitly or implicitly indicated by the PDCCH order.

The PDCCH order may include information indicating the TRP (e.g., TRPx or TRPy) that is a transmission entity of Msg2 (or MsgB). In the exemplary embodiment of FIG. 9, the target of initiation of the RA procedure (e.g., transmission operation of Msg1) indicated by the PDCCH order may be TRPy, and the transmission entity of Msg2 indicated by the PDCCH order may be TRPy. In the exemplary embodiment of FIG. 10, the target of initiation of the RA procedure (e.g., transmission operation of Msg1) indicated by the PDCCH order may be TRPy, and the transmission entity of Msg2 indicated by the PDCCH order may be TRPx.

Each of the indication methods #1 to #6 may be applied to the exemplary embodiment of FIG. 10 (e.g., cross-PDCCH order-based CFRA procedure). A combination of two or more among the indication methods #1 to #6 may be applied to the exemplary embodiment of FIG. 10. A modified method and/or an extended method of the indication methods #1 to #6 may be applied to the exemplary embodiment of FIG. 10.

In the RA procedure of the exemplary embodiment of FIG. 10, the terminal may perform uplink transmission for TRPy. Therefore, the TCI state indicated by the indication method #1 and/or indication method #2 may be a joint/UL TCI state.

Among the exemplary embodiment of FIG. 9 (hereinafter referred to as RA method #1) and the exemplary embodiment of FIG. 10 (hereinafter referred to as RA method #2), one exemplary embodiment may be performed in the communication system. When both RA method #1 and RA method #2 are applicable to the communication system, a method of indicating an actually used method among RA method #1 and RA method #2 may be necessary. An actually used method among RA method #1 and RA method #2 may be determined depending on configuration of a type 1 common search space (CSS) associated with a CORESET pool index. DCI scheduling Msg2 (e.g., RAR message) in the RA procedure may be transmitted in the type 1 CSS. Therefore, Msg2 may be transmitted via a TRP associated with a CORESET pool to which a CORESET having the type 1 CSS belongs. The terminal may expect to receive Msg2 (e.g., RAR message) from the TRP associated with the CORESET pool to which the CORESET having the type 1 CSS belongs. An RA method (e.g., RA method #1 or RA method #2) may be indicated by the type 1 CSS configuration.

Meanwhile, in a communication system where TRP #0 and TRP #1 exist, TCI state information for TRP #0 may be associated with CORESET pool #0, and TCI state information for TRP #1 may be associated with CORESET pool #1. A PDCCH (e.g., PDCCH order) of TRP #0 may be transmitted through a CORESET associated with (e.g., belonging to) CORESET pool #0, and a PDCCH of TRP #1 may be transmitted through a CORESET associated with (e.g., belonging to) CORESET pool #1. Each of TRP #0 and TRP #1 may be one TRP among the above-described TRPx and TRPy. For example, TRP #0 may be TRPx, and TRP #1 may be TRPy. Alternatively, TRP #0 may be TRPy, and TRP #1 may be TRPx.

In the above situation, when the type 1 CSS is configured only in a CORESET associated with CORESET pool #0, an RAR message (e.g., Msg2 or MsgB) may be transmitted only via TRP #0. Conversely, when the type 1 CSS is configured only in a CORESET associated with CORESET pool #1, an RAR message may be transmitted only via TRP #1. In another example, when the type 1 CSS is configured in CORESETs associated with CORESET pool #0 and CORESET pool #1, the RAR message may be transmitted via TRP #0 and/or TRP #1. The terminal may identify a TRP transmitting the RAR message based on the type 1 CSS configuration, and may expect to receive the RAR message from the identified TRP. The TRP transmitting the RAR message may be determined based on the type 1 CSS configuration. An actually used method among RA method #1 and RA method #2 may be indicated by the type 1 CSS configuration.

In RA method #1 and/or RA method #2, a TRP transmitting the PDCCH order (e.g., cross-PDCCH order) may be configured (e.g., indicated). In a communication system where TRP #0 and TRP #1 exist, TCI state information for TRP #0 may be associated with CORESET pool #0, and TCI state information for TRP #1 may be associated with CORESET pool #1. A PDCCH (e.g., PDCCH order) of TRP #0 may be transmitted through a CORESET associated with (e.g., belonging to) CORESET pool #0, and a PDCCH (e.g., PDCCH order) of TRP #1 may be transmitted through a CORESET associated with (e.g., belonging to) CORESET pool #1.

A CORESET (e.g., CORESET configuration) capable of transmission of a PDCCH order (e.g., cross-PDCCH order) may be associated with a specific CORESET pool (e.g., specific CORESET pool index). The PDCCH order may be interpreted as a cross-PDCCH order depending on a context. For example, a base station may configure that the PDCCH order (e.g., cross-PDCCH order) is transmitted through CORESET(s) associated with CORESET pool #0, and may indicate the configuration to the terminal through signaling (e.g., SI signaling, RRC signaling, MAC CE signaling, and/or PHY signaling). The terminal may perform a monitoring operation (e.g., reception operation) for the PDCCH order in the CORESET(s) according to the configuration.

Conversely, the base station may configure that the PDCCH order (e.g., cross-PDCCH order) is transmitted through CORESET(s) associated with CORESET pool #1, and may indicate the configuration to the terminal through signaling (e.g., SI signaling, RRC signaling, MAC CE signaling, and/or PHY signaling). The terminal may perform a monitoring operation (e.g., reception operation) for the PDCCH order in the CORESET(s) according to the configuration. In another example, the base station may configure that the PDCCH order (e.g., cross-PDCCH order) is transmitted through CORESET(s) associated with CORESET pool #0 and CORESET pool #1, and may indicate the configuration to the terminal through signaling (e.g., SI signaling, RRC signaling, MAC CE signaling, and/or PHY signaling). The terminal may perform a monitoring operation (e.g., reception operation) for the PDCCH order in the CORESET(s) according to the configuration.

RA method #1 or RA method #2 may be used in the communication system. Both RA method #1 and RA method #2 may be usable in the communication system, and one actually used RA method may be indicated to the terminal. An RA method used may vary depending on a communication scenario (e.g., communication environment). For example, in an inter-cell mTRP scenario, RA method #1 (e.g., the exemplary embodiment of FIG. 9) may be applied, and in an intra-cell mTRP scenario, RA method #2 (e.g., the exemplary embodiment of FIG. 10) may be applied.

### 2. Cross-PDCCH order-based CBRA procedure

A CBRA procedure may be an RA procedure initiated by the terminal. To support a cross-TRP RA procedure, a cross-PDCCH order-based CBRA procedure may be supported (e.g., operated). When a dedicated preamble is not configured to the terminal, a CBRA procedure may be performed instead of a CFRA procedure. The terminal may acquire TA information for a specific TRP by performing the CBRA procedure. Information for performance of the RA procedure with the specific TRP may be required to support the above operation. Identically or similarly to the above-described cross-PDCCH order-based CFRA procedure, the CBRA procedure may be performed based on a specific triggering signal. Identically or similarly to the above-described cross-PDCCH order-based CFRA procedure, the specific triggering signal for the CBRA procedure may be defined as a PDCCH order. The PDCCH order in the cross-PDCCH order-based CBRA procedure may be identical to the PDCCH order in the cross-PDCCH order-based CFRA procedure. Alternatively, the PDCCH order in the cross-PDCCH order-based CBRA procedure may be a modified form or an extended form of the PDCCH order in the cross-PDCCH order-based CFRA procedure.

The PDCCH order for the cross-PDCCH order-based CBRA procedure may include a TAG ID associated with a specific TRP in order to indicate measurement of a TA for the specific TRP. To provide information on an RO (e.g., RO configuration information) associated with the TRP, the PDCCH order may include RO information. The PDCCH order may include configuration information for SSB (e.g., SSB group) transmitted by the TRP. The terminal may receive the SSB based on the configuration information for SSB, and may identify an RO associated with the SSB. The RO may be determined based on a measurement result of the SSB. The terminal may receive the PDCCH order from the TRP, and may perform an RA procedure initiated (e.g., triggered) by the PDCCH order. The terminal may perform a four-step RA procedure or a two-step RA procedure. In the RA procedure, the terminal may transmit Msg1 or MsgA to the TRP that is the measurement target of the TA. The PDCCH order may include TCI state information for the RA procedure with the TRP that is the measurement target of TA. The TCI state information may be provided to the terminal to indicate information on a beam used for transmission of the RA preamble (e.g., Msg1 or MsgA) in the RA procedure.

The TAG ID may be associated with a joint/UL TCI state. In this case, the TAG ID and/or the TCI state information (e.g., TCI state indication) may be used to indicate a TRP that is the target of the RA procedure and/or information on a beam used to transmit the RA preamble to the TRP. The PDCCH order may include the TAG ID and/or the TCI state information.

The TCI state information may be explicitly or implicitly indicated by the PDCCH order. In the cross-PDCCH order-based CBRA procedure, the terminal may perform the RA procedure without performance of a reception operation of the SSB (e.g., reception operation of the SSB based on beam sweeping), and may acquire TA information through the RA procedure.

### 2.1 Four-step CBRA procedure

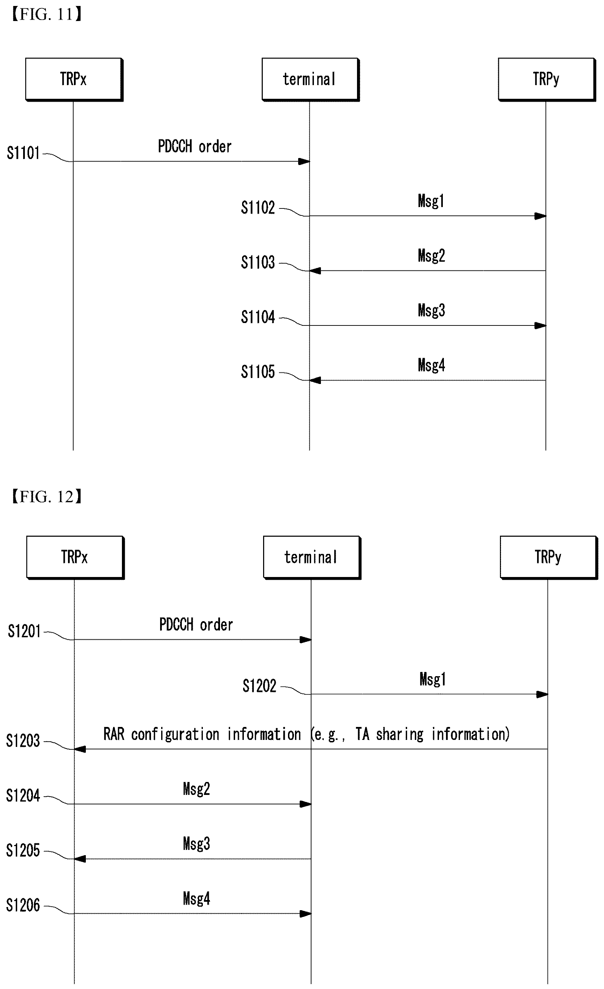

FIGS. 11 to 15 are sequence charts illustrating a cross-PDCCH order-based four-step CBRA procedure.

As shown in FIGS. 11 to 15, a four-step CBRA procedure may be triggered (e.g., initiated) by a cross-PDCCH order. Messages transmitted in the four-step CBRA procedure may be referred to as Msg1, Msg2, Msg3, and Msg4. Msg1 may be a message including an RA preamble. Msg2 may be an RAR message. Msg3 and Msg4 may be messages transmitted and received for contention resolution. A UL grant for Msg3 may be transmitted through Msg2.

In the exemplary embodiment of FIG. 11, TRPx may transmit a PDCCH order to the terminal (S1101). In other words, a base station may transmit the PDCCH order to the terminal via TRPx. The terminal may receive the PDCCH order from TRPx (S1101). The terminal may perform an RA procedure initiated by the PDCCH order with TRPy (S1102, S1103, S1104, S1105). Step S1102 may be a transmission and reception procedure of Msg1 between the terminal and TRPy. In step S1102, the terminal may transmit Msg1 to TRPy, and TRPy may receive Msg1 from the terminal. Step S1103 may be a transmission and reception procedure of Msg2 between the terminal and TRPy. In step S1103, TRPy may transmit Msg2 to the terminal, and the terminal may receive Msg2 from TRPy. Step S1104 may be a transmission and reception procedure of Msg3 between the terminal and TRPy. In step S1104, the terminal may transmit Msg3 to TRPy, and TRPy may receive Msg3 from the terminal. Step S1105 may be a transmission and reception procedure of Msg4 between the terminal and TRPy. In Step S1105, TRPy may transmit Msg4 to the terminal, and the terminal may receive Msg4 from TRPy.

In the exemplary embodiment of FIG. 12, TRPx may transmit a PDCCH order to the terminal (S1201). In other words, a base station may transmit the PDCCH order to the terminal via TRPx. The terminal may receive the PDCCH order from TRPx (S1201). The terminal may perform an RA procedure initiated by the PDCCH order (S1202, S1204, S1205, S1206). In the RA procedure, a transmission and reception procedure of Msg1 may be performed between the terminal and TRPy, and transmission and reception procedures of Msg2, Msg3, and Msg4 may be performed between the terminal and TRPx. Step S1202 may be a transmission and reception procedure of Msg1 between the terminal and TRPy. In step S1202, the terminal may transmit Msg1 to TRPy, and TRPy may receive Msg1 from the terminal.

TRPy that receives Msg1 may generate information required for generation of Msg2 (e.g., RAR message). The information required for generation of Msg2 may be generated in the base station connected to TRPy. The information required for generation of the RAR message may include information on a TA measured by TRPy. TRPy may determine the TA based on Msg1 received from the terminal, and may generate TA information including the determined TA. The information required for generation of the RAR message may include an RNTI determined by TRPy. The information required for generation of the RAR message may be defined as RAR configuration information. In step S1203, TRPy may transmit the RAR configuration information to TRPx, and TRPx may receive the RAR configuration information from TRPy. Step S1203 may be a sharing step of the RAR configuration information (e.g., TA information). The RAR configuration information may include at least one among the TA information, information required for determination of the TA, the RNTI for transmission of Msg2, or the information required for determination of the RNTI for transmission of Msg2. Step S1203 may be performed identically or similarly to step S1003 illustrated in FIG. 10.

Step S1204 may be a transmission and reception procedure of Msg2 between the terminal and TRPx. In step S1204, TRPx may transmit Msg2 to the terminal, and the terminal may receive Msg2 from TRPx. Step S1205 may be a transmission and reception procedure of Msg3 between the terminal and TRPx. In step S1205, the terminal may transmit Msg3 to TRPx, and TRPx may receive Msg3 from the terminal. Step S1206 may be a transmission and reception procedure of Msg4 between the terminal and TRPx. In step S1206, TRPx may transmit Msg4 to the terminal, and the terminal may receive Msg4 from TRPx.

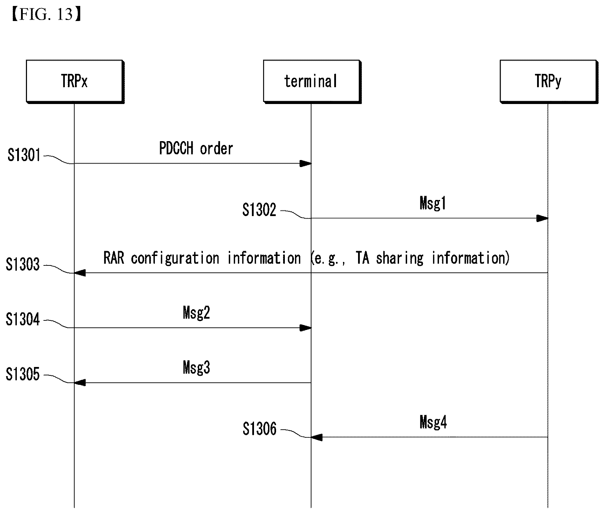

The exemplary embodiment of FIG. 13 may be performed identically to the exemplary embodiment of FIG. 12 except for the transmission and reception procedure of Msg4. Steps S1301, S1302, S1303, S1304, and S1305 may be performed identically to steps S1201, S1202, S1203, S1204, and S1205, respectively. In step S1306, TRPy may transmit Msg4 to the terminal, and the terminal may receive Msg4 from TRPy.

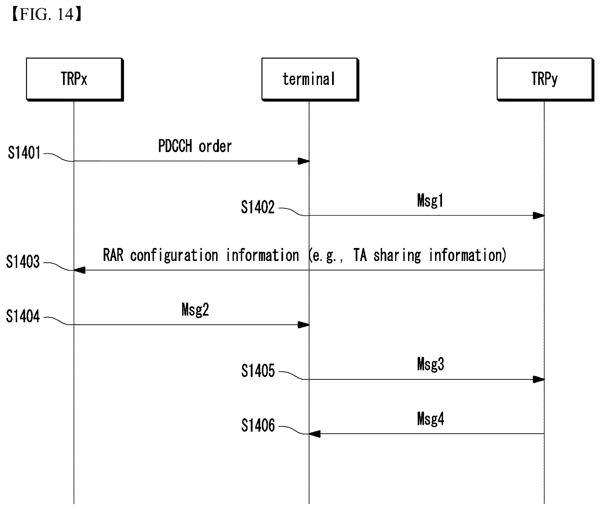

The exemplary embodiment of FIG. 14 may be performed identically to the exemplary embodiment of FIG. 12 except for the transmission and reception procedures of Msg3 and Msg4. Steps S1401, S1402, S1403, and S1404 may be performed identically to steps S1201, S1202, S1203, and S1204, respectively. In step S1405, the terminal may transmit Msg3 to TRPy, and TRPy may receive Msg3 from the terminal. In step S1406, TRPy may transmit Msg4 to the terminal, and the terminal may receive Msg4 from TRPy.

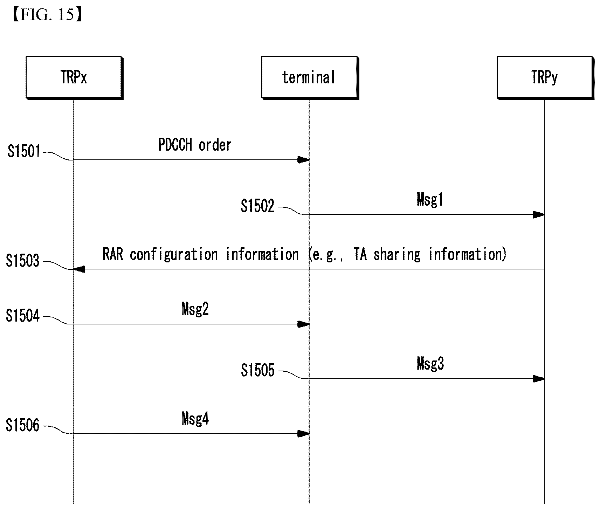

The exemplary embodiment of FIG. 15 may be performed identically to the exemplary embodiment of FIG. 12 except for the transmission and reception procedure of Msg3. Steps S1501, S1502, S1503, S1504, and S1506 may be performed identically to steps S1201, S1202, S1203, S1204, and S1206, respectively. In step S1505, the terminal may transmit Msg3 to TRPy, and TRPy may receive Msg3 from the terminal.

The cross-PDCCH order-based four-step CBRA procedure may be performed based on one method among FIGS. 11 to 15. The base station may configure (e.g., indicate) one method among FIGS. 11 to 15 to the terminal through signaling. The terminal may perform the cross-PDCCH order-based four-step CBRA procedure based on the method indicated by the base station. One method among FIGS. 11 to 15 may be fixed, and the cross-PDCCH order-based four-step CBRA procedure may be performed based on one fixed method. When one method among FIGS. 11 to 15 is configured (e.g., operated), a performance method of the cross-PDCCH order-based four-step CBRA procedure may be configured as follows.

In a communication system where TRP #0 and TRP #1 exist, TCI state information for TRP #0 may be associated with CORESET pool #0, and TCI state information for TRP #1 may be associated with CORESET pool #1. A PDCCH (e.g., PDCCH order) of TRP #0 may be transmitted through a CORESET associated with (e.g., belonging to) CORESET pool #0, and a PDCCH (e.g., PDCCH order) of TRP #1 may be transmitted through a CORESET associated with (e.g., belonging to) CORESET pool #1.

Msg1 may be a signaling message transmitted to the TRP that is the measurement target of the TA. Since DCI scheduling an RAR message in the RA procedure is transmitted through the type 1 CSS, the RAR message may be transmitted via a TRP associated with a CORESET pool to which the CORESET in which the type 1 CSS is configured belongs. When the type 1 CSS is configured in a CORESET associated with CORESET pool #0, the RAR message may be transmitted via TRP #0. When the type 1 CSS is configured in a CORESET associated with CORESET pool #1, the RAR message may be transmitted via TRP #1. For another example, when the type 1 CSS is configured in CORESETs associated with CORESET pool #0 and CORESET pool #1, the RAR message may be transmitted via TRP #0 and/or TRP #1. Since a TRP capable of transmitting the RAR message may be determined based on the configuration of the type 1 CSS, a TRP transmitting Msg2 in the exemplary embodiments of FIG. 11 through FIG. 15 may be determined based on the configuration of the type 1 CSS.

A UL grant for transmission of Msg3 may be transmitted to the terminal through Msg2. In other words, Msg2 transmitted to the terminal may include the UL grant for transmission of Msg3. Msg2 may include the UL grant, TCI state information, and/or a TAG ID. The TCI state information and/or the TAG ID may be configured to be associated with the UL grant. The UL grant, the TCI state information, and/or the TAG ID included in Msg2 may be used to indicate a TRP that is a transmission target of Msg3. For example, the TCI state information and/or the TAG ID may be associated with the TRP that is the transmission target of Msg3. The terminal may identify the TRP that is the transmission target of Msg3 based on the UL grant, the TCI state information, and/or the TAG ID included in Msg2, and may transmit Msg3 to the identified TRP.

DCI scheduling transmission of Msg4 may be transmitted on a PDCCH, and Msg4 may be transmitted on a PDSCH indicated by the DCI. The base station may determine a TRP that transmits Msg4, and the TRP determined by the base station may transmit Msg4 to the terminal.

The TRP transmitting and receiving each of Msg1, Msg2, Msg3, and Msg4 may be determined based on configuration information. One of the methods illustrated in FIG. 11 through FIG. 15 may be used based on the configuration information.

In the methods illustrated in FIG. 11 through FIG. 15, a TRP capable of transmitting a cross-PDCCH order may be configured. In a communication system in which TRP #0 and TRP #1 exist, TCI state information for TRP #0 may be associated with CORESET pool #0, and TCI state information for TRP #1 may be associated with CORESET pool #1. The PDCCH of TRP #0 (e.g., PDCCH order) may be transmitted through a CORESET associated with (e.g., belonging to) CORESET pool #0, and the PDCCH of TRP #1 (e.g., PDCCH order) may be transmitted through a CORESET associated with (e.g., belonging to) CORESET pool #1.

The CORESET in which the cross-PDCCH order is transmitted may be configured to be associated with a specific CORESET pool index. For example, transmission of the cross-PDCCH order in CORESET(s) associated with CORESET pool #0 may be configured. Conversely, transmission of the cross-PDCCH order in CORESET(s) associated with CORESET pool #1 may be configured. In another example, transmission of the cross-PDCCH order in CORESET(s) associated with CORESET pool #0 and CORESET pool #1 may be configured. The base station may configure CORESET(s) in which the cross-PDCCH order is transmitted, and may transmit information on the configuration to the terminal through signaling (e.g., SI signaling, RRC signaling, MAC CE signaling, and/or PHY signaling). The terminal may expect to receive the cross-PDCCH order in the CORESET(s) configured by the base station.

In addition to the methods illustrated in FIG. 11 through FIG. 15, a four-step CBRA procedure based on a PDCCH order may be performed as follows.

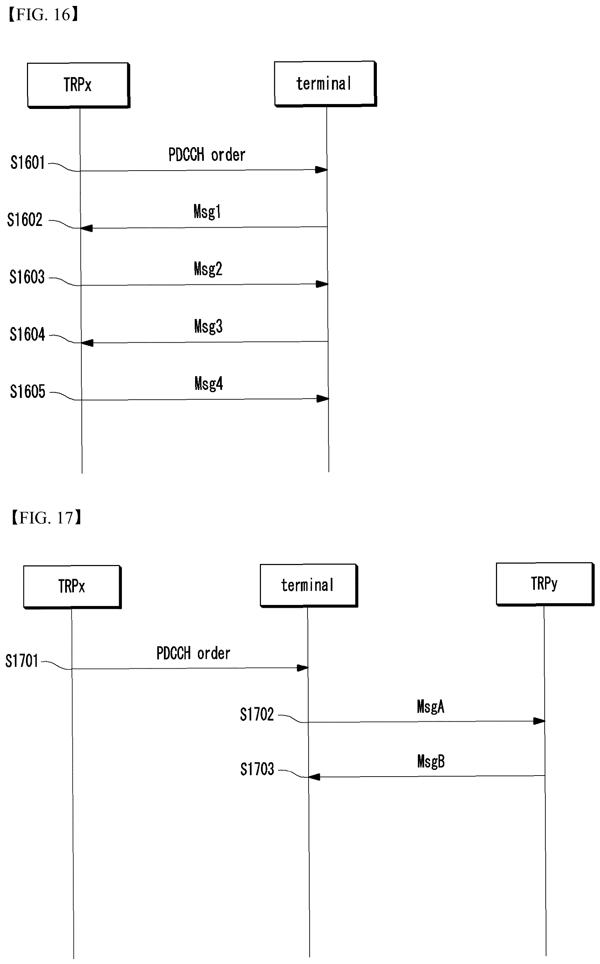

FIG. 16 is a sequence chart illustrating a four-step CBRA procedure based on a PDCCH order.

As shown in FIG. 16, TRPx may transmit a PDCCH order to the terminal (S1601). In other words, a base station may transmit the PDCCH order to the terminal via TRPx. The terminal may receive the PDCCH order from TRPx (S1601). In step S1601, the PDCCH order may be transmitted to trigger an RA procedure for TRPx. In other words, in the exemplary embodiments of FIG. 11 through FIG. 15, the PDCCH order of TRPx is transmitted to trigger an RA procedure for TRPy, but in the exemplary embodiment of FIG. 16, the PDCCH order of TRPx may be transmitted to trigger an RA procedure for TRPx.

The terminal may perform the RA procedure initiated by the PDCCH order with TRPx (S1602, S1603, S1604, S1605). Step S1602 may be a transmission and reception procedure of Msg1 between the terminal and TRPx. In step S1602, the terminal may transmit Msg1 to TRPx, and TRPx may receive Msg1 from the terminal. Step S1603 may be a transmission and reception procedure of Msg2 between the terminal and TRPx. In step S1603, TRPx may transmit Msg2 to the terminal, and the terminal may receive Msg2 from TRPx. Step S1604 may be a transmission and reception procedure of Msg3 between the terminal and TRPx. In step S1604, the terminal may transmit Msg3 to TRPx, and TRPx may receive Msg3 from the terminal. Step S1605 may be a transmission and reception procedure of Msg4 between the terminal and TRPx. In step S1605, TRPx may transmit Msg4 to the terminal, and the terminal may receive Msg4 from TRPx.

The RA procedure in FIG. 16 may be performed identically or similarly to the RA procedure illustrated in FIG. 11 through FIG. 15. The RA procedure in FIG. 16 may be a modified RA procedure or an extended RA procedure for the RA procedure illustrated in FIG. 11 through FIG. 15. The RA procedure in FIG. 16 may be performed based on a combination of the RA procedures illustrated in FIG. 11 through FIG. 15.

The RA procedure with the TRP that transmitted the PDCCH order and the RA procedure with another TRP different from the TRP that transmitted the PDCCH order (e.g., cross-PDCCH order) may both be possible. In this case, the PDCCH order may implicitly or explicitly include information indicating the TRP that is the target of the RA procedure triggered by the PDCCH order. TCI state information for communication with the TRP (e.g., the target of the TA procedure) may be included in the PDCCH order. The TRP that is the target of the RA procedure may be indicated by one method among the above-described indication methods #1 to #6. The TRP that is the target of the RA procedure may be indicated by a modified method or an extended method of the above-described indication methods #1 to #6. The TRP that is the target of the RA procedure may be indicated by a combination of two or more of the above-described indication methods #1 to #6.

### 2.2 Two-step CBRA procedure

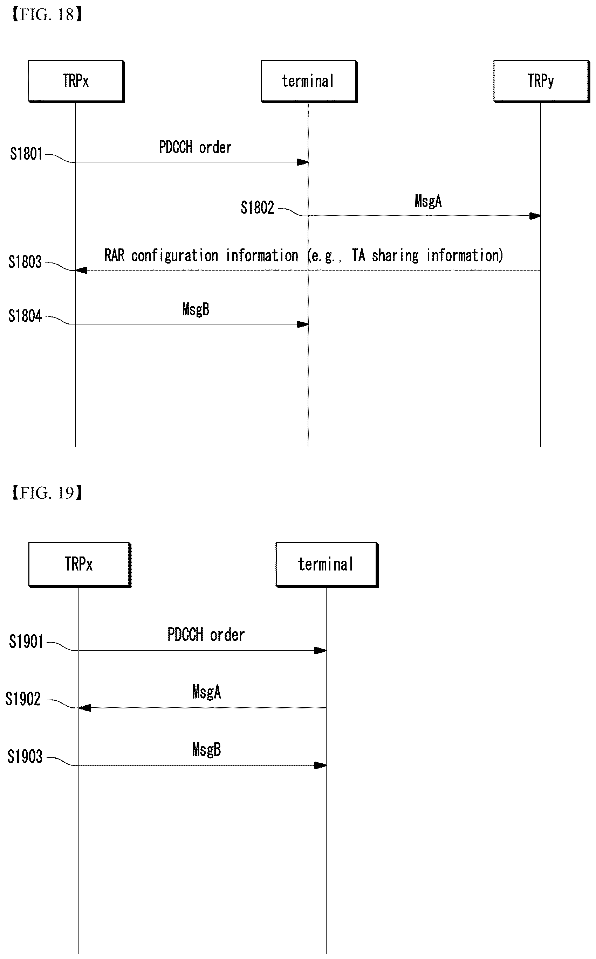

FIG. 17 and FIG. 18 are sequence charts illustrating a two-step CBRA procedure based on a cross-PDCCH order.

As shown in FIG. 17 and FIG. 18, a two-step CBRA procedure may be triggered (e.g., initiated) by a cross-PDCCH order. Messages transmitted in the two-step CBRA procedure may be referred to as MsgA and MsgB. MsgA may be a message including Msg1 and Msg3 in the four-step RA procedure. In other words, MsgA may include an RA preamble and a PUSCH. MsgB may be a message including Msg2 and Msg4 in the four-step RA procedure. DCI scheduling the transmission of MsgB may be transmitted on a PDCCH, and MsgB may be transmitted on a PDSCH indicated by the DCI.

In the exemplary embodiment of FIG. 17, TRPx may transmit a PDCCH order to the terminal (S1701). In other words, a base station may transmit the PDCCH order to the terminal via TRPx. The terminal may receive the PDCCH order from TRPx (S1701). The terminal may perform an RA procedure initiated by the PDCCH order with TRPy (S1702, S1703). Step S1702 may be a transmission and reception procedure of MsgA between the terminal and TRPy. In step S1702, the terminal may transmit MsgA to TRPy, and TRPy may receive MsgA from the terminal. Step S1703 may be a transmission and reception procedure of MsgB between the terminal and TRPy. In step S1703, TRPy may transmit MsgB to the terminal, and the terminal may receive MsgB from TRPy.

In the exemplary embodiment of FIG. 18, TRPx may transmit a PDCCH order to the terminal (S1801). In other words, a base station may transmit the PDCCH order to the terminal via TRPx. The terminal may receive the PDCCH order from TRPx (S1801). The terminal may perform an RA procedure initiated by the PDCCH order (S1802, S1804). In the RA procedure, a transmission and reception procedure of MsgA may be performed between the terminal and TRPy, and a transmission and reception procedure of MsgB may be performed between the terminal and TRPx. Step S1802 may be a transmission and reception procedure of MsgA between the terminal and TRPy. In step S1802, the terminal may transmit MsgA to TRPy, and TRPy may receive MsgA from the terminal. TRPy that receives MsgA may generate information required for generation of MsgB. The information required for generation of MsgB may include information on a TA measured by TRPy. TRPy may determine the TA based on MsgA received from the terminal and may generate TA information including the determined TA. The TA may be determined in a base station to which TRPy is connected. The information required for generation of MsgB may include an RNTI determined by TRPy. The RNTI may be determined in the base station to which TRPy is connected.

The information required for generation of MsgB may be defined as RAR configuration information. In step S1803, TRPy may transmit the RAR configuration information to TRPx, and TRPx may receive the RAR configuration information from TRPy. Step S1803 may be a sharing step of the RAR configuration information (e.g., TA information). The RAR configuration information may include at least one among the TA information, the information required for determining the TA, the RNTI for transmission of MsgB, or the information required for determining the RNTI for transmission of MsgB. S1803 may be performed identically or similarly to step S1003 illustrated in FIG. 10. In step S1804, TRPx may transmit MsgB to the terminal, and the terminal may receive MsgB from TRPx.

A two-step CBRA procedure based on a cross-PDCCH order may be performed based on one method among FIG. 17 and FIG. 18. A base station may configure (e.g., indicate) one method among FIG. 17 and FIG. 18 to the terminal through signaling. The terminal may perform the two-step CBRA procedure based on the cross-PDCCH order based on the method indicated by the base station. One method among FIG. 17 and FIG. 18 may be fixed, and the two-step CBRA procedure based on the cross-PDCCH order may be performed based on the fixed method. When one method among FIG. 17 and FIG. 18 is configured (e.g., operated), a method of performing the two-step CBRA procedure based on the cross-PDCCH order may be configured as follows.

In a communication system in which TRP #0 and TRP #1 exist, TCI state information for TRP #0 may be associated with CORESET pool #0, and TCI state information for TRP #1 may be associated with CORESET pool #1. The PDCCH of TRP #0 (e.g., PDCCH order) may be transmitted through a CORESET associated with (e.g., belonging to) CORESET pool #0, and the PDCCH of TRP #1 (e.g., PDCCH order) may be transmitted through a CORESET associated with (e.g., belonging to) CORESET pool #1.

MsgA may be a signaling message transmitted to a TRP that is a measurement target of a TA. Since DCI scheduling MsgB in the RA procedure is transmitted through a type 1 CSS, MsgB may be transmitted via a TRP associated with a CORESET pool to which the CORESET in which the type 1 CSS is configured belongs. When the type 1 CSS is configured in a CORESET associated with CORESET pool #0, MsgB may be transmitted via TRP #0. Conversely, when the type 1 CSS is configured in a CORESET associated with CORESET pool #1, MsgB may be transmitted via TRP #1. In another example, when the type 1 CSS is configured in CORESETs associated with CORESET pool #0 and CORESET pool #1, MsgB may be transmitted via TRP #0 and/or TRP #1. Since a TRP capable of transmitting MsgB may be determined based on the configuration of the type 1 CSS, the TRP transmitting MsgB in the exemplary embodiments of FIG. 17 and FIG. 18 may be determined based on the configuration of the type 1 CSS.

In the methods illustrated in FIG. 17 and FIG. 18, a TRP capable of transmitting a cross-PDCCH order may be configured. In the communication system in which TRP #0 and TRP #1 exist, TCI state information for TRP #0 may be associated with CORESET pool #0, and TCI state information for TRP #1 may be associated with CORESET pool #1. The PDCCH of TRP #0 (e.g., PDCCH order) may be transmitted through a CORESET associated with (e.g., belonging to) CORESET pool #0, and the PDCCH of TRP #1 (e.g., PDCCH order) may be transmitted through a CORESET associated with (e.g., belonging to) CORESET pool #1.

The CORESET in which the cross-PDCCH order is transmitted may be configured to be associated with a specific CORESET pool index. For example, transmission of the cross-PDCCH order in CORESET(s) associated with CORESET pool #0 may be configured. Conversely, transmission of the cross-PDCCH order in CORESET(s) associated with CORESET pool #1 may be configured. In another example, transmission of the cross-PDCCH order in CORESET(s) associated with CORESET pool #0 and CORESET pool #1 may be configured. A base station may configure CORESET(s) in which the cross-PDCCH order is transmitted, and may transmit information on the configuration to the terminal through signaling (e.g., SI signaling, RRC signaling, MAC CE signaling, and/or PHY signaling). The terminal may expect to receive the cross-PDCCH order in the CORESET(s) configured by the base station.

In addition to the methods illustrated in FIG. 17 and FIG. 18, a two-step CBRA procedure based on a PDCCH order may be performed as follows.

FIG. 19 is a sequence chart illustrating a two-step CBRA procedure based on a PDCCH order.

As shown in FIG. 19, TRPx may transmit a PDCCH order to the terminal (S1901). In other words, a base station may transmit the PDCCH order to the terminal via TRPx. The terminal may receive the PDCCH order from TRPx (S1901). In step S1901, the PDCCH order may be transmitted to trigger an RA procedure for TRPx. In other words, in the exemplary embodiments of FIG. 17 and FIG. 18, the PDCCH order of TRPx is transmitted to trigger an RA procedure for TRPy, but in the exemplary embodiment of FIG. 19, the PDCCH order of TRPx may be transmitted to trigger an RA procedure for TRPx.

The terminal may perform the RA procedure initiated by the PDCCH order with TRPx (S1902, S1903). Step S1902 may be a transmission and reception procedure of MsgA between the terminal and TRPx. In step S1902, the terminal may transmit MsgA to TRPx, and TRPx may receive MsgA from the terminal. Step S1903 may be a transmission and reception procedure of MsgB between the terminal and TRPx. In step S1903, TRPx may transmit MsgB to the terminal, and the terminal may receive MsgB from TRPx.

The RA procedure in FIG. 19 may be performed identically or similarly to the RA procedure illustrated in FIG. 17 and FIG. 18. The RA procedure in FIG. 19 may be a modified RA procedure or an extended RA procedure for the RA procedure illustrated in FIG. 17 and FIG. 18. The RA procedure in FIG. 19 may be performed based on a combination of the RA procedures illustrated in FIG. 17 and FIG. 18.

The RA procedure with the TRP that transmitted the PDCCH order and the RA procedure with another TRP different from the TRP that transmitted the PDCCH order (e.g., cross-PDCCH order) may both be possible. In this case, the PDCCH order may implicitly or explicitly include information indicating the TRP that is the target of the RA procedure triggered by the PDCCH order. TCI state information for communication with the TRP (e.g., the target of the TA procedure) may be included in the PDCCH order. The TRP that is the target of the RA procedure may be indicated by one method among the above-described indication methods #1 to #6. The TRP that is the target of the RA procedure may be indicated by a modified method or an extended method of the above-described indication methods #1 to #6. The TRP that is the target of the RA procedure may be indicated by a combination of two or more of the above-described indication methods #1 to #6.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), comprising:
receiving, from a first transmission and reception point (TRP), a cross-physical downlink control channel (PDCCH) order;
identifying a second TRP that is a target of a random access (RA) procedure based on first indication information included in the cross-PDCCH order; and
transmitting, to the second TRP, a message including an RA preamble,
wherein the first TRP and the second TRP are different TRPs.

2. The method of claim 1, wherein the first indication information indicates a timing advance group (TAG) identifier (ID), and the TAG ID is configured to be associated with a transmission configuration indicator (TCI) state.

3. The method of claim 1, wherein the first indication information indicates a TCI state for the second TRP.

4. The method of claim 1, wherein the first indication information indicates a dedicated preamble for the RA procedure, a dedicated preamble group to which the dedicated preamble belongs is configured to be associated with a control resource set (CORESET) pool, and the CORESET pool is configured to be associated with a TCI state.

5. The method of claim 1, wherein the first indication information indicates a random access channel (RACH) occasion (RO) for transmission of the message, an RO group to which the RO belongs is configured to be associated with a CORESET pool, and the CORESET pool is configured to be associated with a TCI state.

6. The method of claim 1, wherein the first indication information indicates a cell identifier (ID), and the second TRP belongs to a cell indicated by the cell ID.

7. The method of claim 1, wherein the message including the RA preamble is Msg1 in a four-step RA procedure or MsgA in a two-step RA procedure.

8. The method of claim 1, further comprising receiving, from the first TRP or the second TRP, a random access response (RAR) message that is a response to the message, wherein the RAR message includes timing advance (TA) information for the second TRP.

9. The method of claim 8, wherein the UE expects to receive the RAR message from one TRP among the first TRP or the second TRP, the one TRP being associated with a CORESET pool to which a CORESET in which a type 1 common search space (CSS) is configured belongs.

10. The method of claim 8, wherein the RAR message further includes an uplink (UL) grant and second indication information indicating a transmission target of Msg3, and Msg3 is transmitted to one TRP determined based on the second indication information among the first TRP or the second TRP.

11. A method of a base station, comprising:
generating a cross-physical downlink control channel (PDCCH) order indicating a second transmission and reception point (TRP) that is a target of a random access (RA) procedure; and
transmitting the cross-PDCCH order to a user equipment (UE) via a first TRP,
wherein in the RA procedure triggered by the cross-PDCCH order, a message including an RA preamble is transmitted from the UE to the second TRP, and the first TRP and the second TRP are different TRPs connected to the base station.

12. The method of claim 11, wherein the first indication information indicates a timing advance group (TAG) identifier (ID), and the TAG ID is configured to be associated with a transmission configuration indicator (TCI) state.

13. The method of claim 11, wherein the first indication information indicates a TCI state for the second TRP.

14. The method of claim 11, wherein the first indication information indicates a dedicated preamble for the RA procedure, a dedicated preamble group to which the dedicated preamble belongs is configured to be associated with a control resource set (CORESET) pool, and the CORESET pool is configured to be associated with a TCI state.

15. The method of claim 11, wherein the first indication information indicates a random access channel (RACH) occasion (RO) for transmission of the message, an RO group to which the RO belongs is configured to be associated with a CORESET pool, and the CORESET pool is configured to be associated with a TCI state.

16. The method of claim 11, wherein the first indication information indicates a cell identifier (ID), and the second TRP belongs to a cell indicated by the cell ID.

17. The method of claim 11, wherein the message including the RA preamble is Msg1 in a four-step RA procedure or MsgA in a two-step RA procedure.

18. A user equipment (UE) comprising at least one processor, wherein the at least one processor causes the UE to perform:
receiving, from a first transmission and reception point (TRP), a cross-physical downlink control channel (PDCCH) order;
identifying a second TRP that is a target of a random access (RA) procedure based on first indication information included in the cross-PDCCH order; and
transmitting, to the second TRP, a message including an RA preamble,
wherein the first TRP and the second TRP are different TRPs.

19. The UE of claim 18, wherein the first indication information indicates at least one of: a timing advance group (TAG) identifier (ID) for the second TRP, a transmission configuration indicator (TCI) state for the second TRP, a dedicated preamble for the RA procedure, a random access channel (RACH) occasion (RO) for transmission of the message, or a cell identifier (ID) indicating a cell to which the second TRP belongs.

20. The UE of claim 18, wherein the at least one processor further causes the UE to perform: receiving, from the first TRP or the second TRP, a random access response (RAR) message that is a response to the message,
wherein the RAR message is received from one TRP among the first TRP or the second TRP, the one TRP being associated with a control resource set (CORESET) pool to which a CORESET in which a type 1 common search space (CSS) is configured belongs.
